# EUROPÄISCHE PATENTSCHRIFT

(11) **EP 2 906 381 B1**
(45) Veröffentlichungstag und Bekanntmachung des Hinweises auf die Patenterteilung: **04.05.2016**
(21) Anmeldenummer: 13773182.4
(22) Anmeldetag: 27.09.2013
(51) Int. Cl.: B23C 5/10, B23B 51/08

(54) **STIRNFRÄSER ZUR BEARBEITUNG VON FASERVERSTÄRKTEN WERKSTOFFEN WIE CFK**
FACE CUTTER FOR MACHINING FIBRE-REINFORCED MATERIALS SUCH AS CARBON-FIBRE-REINFORCED PLASTICS (CFRP)
FRAISE EN BOUT POUR L'USINAGE DE MATÉRIAUX RENFORCÉS PAR DES FIBRES TELS QUE DES PLASTIQUES RENFORCÉS PAR DES FIBRES DE CARBONE

(30) Priorität: 10.10.2012 DE 102012019804
(43) Veröffentlichungstag der Anmeldung: 19.08.2015
(73) Patentinhaber: Hufschmied Zerspanungssysteme GmbH, 86399 Bobingen (DE)
(72) Erfinder: HUFSCHMIED, Ralph, 86399 Bobingen (DE)
(74) Vertreter: Munk, Ludwig
(86) Internationale Anmeldenummer: PCT/EP2013/002912
(87) Internationale Veröffentlichungsnummer: WO 2014/056582

(56) Entgegenhaltungen:
- WO-A1-2010/061933
- DE-A1-102010 051 377
- DE-C1- 3 742 942
- DE-U1-202006 016 531
- US-A- 5 221 163

## Beschreibung

Die Erfindung betrifft einen Stirnfräser zur Bearbeitung von faserverstärkten Werkstoffen wie CFK gemäß dem Oberbegriff des Patentanspruchs 1. Ein solcher Stirnfräser geht beispielsweise aus der US 6 164876 vor. Bei der Fräs- und Bohrbearbeitung von faserverstärkten Werkstoffen wie z.B. CFK, GFK und polyesterfadenverstärkten Kunststoffen stellt sich das Problem, dass es häufig zu einem Ausreißen einzelner Fasern oder zu einem Aufspleißen des Polyesterfadens kommt, wenn ein Werkstück aus einem solchen Werkstoff mit herkömmlichen Werkzeugen für die zerspanende Bearbeitung bearbeitet wird. Einzelne Fasern werden also aus dem Rand der Bearbeitungsstelle herausgerissen, wieder andere beim Vorbeilauf des Werkzeugs an den Rand der Bearbeitungsstelle gedrückt, so dass sie erst an einem über den Rand der Bearbeitungsstelle überstehenden Ende geschnitten werden und daher nach der Bearbeitung über den Rand überstehen. Üblicherweise wird daher nach einem Grobbearbeitungs- oder Schruppbearbeitungsgang ein Nachbearbeitungsgang, also ein Schlichten oder Nachreiben durchgeführt.

Ausgehend von in der Metallbearbeitung bekannten Schlicht-Schrupp-Fräsern, wie z.B. gemäß der deutschen Patentschrift DE 3742942 C1 oder der deutschen Gebrauchsmusterschrift DE 8609688 U1 oder der US-Patentschrift US 4 285 618 B, bei denen jeder Schruppschneide eine nacheilende Schlichtschneide zugeordnet ist, wurden auch im Bereich der Bearbeitung von faserverstärkten Werkstoffen und von Sandwich-Materialien mit solchen Werkstoffen Anstrengungen unternommen, mit dem Ziel, mit einem Werkzeug sowohl eine Grobbearbeitung, also einen Schrupparbeitsgang, als auch eine Nachbearbeitung, also einen Nachreib- oder Schlichtarbeitsgang bewerkstelligen zu können, um so zu einer verbesserten Oberflächenqualität bei geringerer Bearbeitungsdauer zu gelangen.

So zeigt z.B. die deutsche Gebrauchsmusterschrift DE 202 09 768 U einen Stufenbohrer zur Bearbeitung von Sandwich-Materialien, bei dem die Hauptschneiden an der Stufe zueinander so versetzt sind, dass die eine Hauptschneide vorschneidet und die andere nachreibt. Die deutsche Gebrauchsmusterschrift DE 202 11589 U1 zeigt einen weiteren Bohrer zur Bearbeitung von Sandwich-Werkstücken, bei dem zwei Vorbearbeitungsstege mehr oder weniger stumpf als Räumwerkzeuge ausgebildet sind und die in Umfangsrichtung jeweils nacheilenden Nachbearbeitungsstege mit scharfen Nebenschneiden als Reibahlen. Ähnliche Bohrer zeigen die Gebrauchsmusterschriften DE 202 11592 U und DE 203 04580 U1, wobei dort die breiten Rundschlifffasen zur Aussteifung des Bohrlochs und abgerundete Schneidenecken zur Vermeidung des Fadenausreißens zum Einsatz kommen.

Einen Stirnfräser zur Bearbeitung von faserverstärkten Kunststoffen, bei dem die Idee einer Funktionentrennung in die Hauptschneidarbeit erledigende, vorlaufende Bearbeitungsstege und lediglich nachbearbeitende, nacheilende Stege ebenfalls umgesetzt worden ist, zeigt die deutsche Patentschrift DE 112 009 000 013 B4. Dort haben die vorlaufenden Stege einen Linksdrall und die nachlaufenden Stege einen Rechtsdrall. Dies soll dort zur Vermeidung von Graten dienen.

Ferner sind aus der Bearbeitung von Kunststoffen Fräswerkzeuge bekannt, die ähnlich wie Feilen an den Umfangsflächen ihrer Bearbeitungsstege mit Zähnen versehen sind, die insbesondere durch sich kreuzende, eine gegenüber dem Werkzeugdurchmesser relativ geringe Tiefe aufweisende Rillen erzeugt sind. Ein solches Werkzeug zeigt schon die deutsche Patentschrift DE 736 449, ebenso wie die deutsche Patentschrift DE 10 232 037 B4 der Anmelderin.

Die Verwendung von Werkzeugen mit Mantelrillen und Spanbrechemuten für die Bearbeitung von faserverstärkten Werkstoffen ist aus der US-Patentschrift US 5,221,163 und der internationalen Anmeldung WO 2010/061933 A1 bekannt.

Die US-Patentschrift US 6,164,876 offenbart ein Werkzeug mit zwei Stegen, von denen einer eine Vielzahl von Zähnen und der andere eine konventionelle Schneidkante aufweist.

Hiervon ausgehend liegt der vorliegenden Erfindung die Aufgabe zugrunde, einen Stirnfräser zur Bearbeitung von faserverstärkten Werkstoffen so weiterzubilden, dass bei geringerer Bearbeitungsdauer besser Oberflächenqualitäten erreicht werden können.

Diese Aufgabe wird mit den Merkmalen des Anspruchs 1 gelöst.

Wie bei dem gattungsgemäßen Zerspanungswerkzeug wird erfindungsgemäß eine Funktionentrennung in eine erste Bearbeitungsfunktion und eine zweite Bearbeitungsfunktion vorgenommen, wobei die unterschiedlichen Bearbeitungsfunktionen mittels unterschiedlich ausgebildeter Stege ausgeführt werden. Dazu ist zumindest einer der um ein Zylinderkemsegment herum platzierten und von einer Mehrzahl von Spannuten in Umfangsrichtung voneinander beabstandeten Stege von einer ersten Art und wird nachfolgend als Vorbearbeitungssteg bezeichnet und ein anderer der Stege von einer zweiten Art und wird nachfolgend als Nachbearbeitungssteg bezeichnet. Es ist allerdings schwer zu sagen, welche Bearbeitung im Zerspanungseinsatz des rotierenden Werkzeugs vorher oder nachher erfolgt, so dass diese Bezeichnung nicht einschränkend verstanden werden soll. Wie bei dem gattungsgemäßen Zerspanungswerkzeug, welches an seinen Bearbeitungsstegen umfangsseitige Schneidkanten mit daran anschließenden, zur Aussteifung dienenden Rundschliffphasen aufweist haben auch die Stege des erfindungsgemäßen Zerspanungswerkzeugs jeweils einen umfangsseitigen Arbeitsbereich, der sich allerdings nicht nur mit Drall spiralsegmentförmig um die Werkzeugachse des Zerspanungswerkzeugs erstrecken kann, sondern in anderen Ausführungsformen auch entlang der Werkzeugachse, also parallel zur Werkzeugachse, wenn die Spannuten nicht gewendelt sind.

Der Erfinder hat erkannt, dass mit einer Kombination der aus der Kunststoffbearbeitung bekannten, umfangsseitigen Arbeitsbereichen mit einer Vielzahl von Zähnen einerseits und als eine Vilezahl von Schlicht- bzw. Reibschneiden dienenden Mantelrillen andererseits bei faserverstärkten Werkstoffen besonders gute Ergebnisse bei der Oberflächengüte der zu bearbeitenden Werkstücke erzielt werden können.

Erfindungsgemäß ist der Arbeitsbereich jedes Vorbearbeitungsstegs daher als umfangsseitige Feile mit einer Vielzahl von Zähnen ausgebildet - wie es an sich schon aus der Kunststoffbearbeitung bekannt ist. Die Zähne sind also in eine zylinderoberflächensegmentförmige Mantelfläche des Arbeitsbereichs eingearbeitet. Abweichend von den bekannten Kunststoffzerspanungswerkzeugen haben die Nachbearbeitungsstege jedoch eine andere Funktion und Ausgestaltung: Im Arbeitsbereich jedes Nachbearbeitungsstegs ist eine Anzahl sich parallel zur oder mit Drall spiralsegmentförmig um die Werkzeugachse erstreckender, scharfer Schneiden vorgesehen, also Schneiden an einem spitzen Schneidkeil mit einem positiven Spanwinkel, beispielsweise von 5 - 15 °, insbesondere 8 °. Dabei umfasst die Anzahl scharfer Schneiden an zumindest einem Nachbearbeitungssteg eine Mehrzahl von jeweils an einer umfangsseitigen Mantelrille vorgesehenen Schneiden, wobei die Mantelrillen parallel zueinander und mit Steigung zur dem zumindest einen Nachbearbeitungssteg vorlaufenden Spannut in eine zylinderoberflächensegmentförmige Mantelfläche des Arbeitsbereichs eingearbeitet sind. Der umfangsseitige Arbeitsbereich an dem Nachbearbeitungssteg ist also von spiralsegmentförmig verlaufenden parallel nebeneinander nach Art eines Schraubengewindes verlaufenden Mantelrillen durchsetzt.

Es wird davon ausgegangen, dass diese Werkzeugeometrie im Prinzip wie bei den bekannten Schlicht-Schrupp-Fräsern und -Bohrern so wirkt, dass an den Vorbearbeitungsstegen eine Grob- bzw. Schruppbearbeitung stattfindet, bei der die einzelnen Zähne den wesentlichen Materialabtrag leisten, wohingegen an den Nachbearbeitungsstegen ein Schlichten bzw. Nachreiben oder -schaben erfolgt. Durch den Einsatz von Einzelzähnen scheint es beim Schruppen zu einer Zertrümmerung des Werkstoffes zu kommen, ein Herausreißen von Einzelfäden jedoch weitgehend vermeidbar zu sein. D.h., dass durch die beim Auftreffen der Zähne am Vor- bzw. Schruppbearbeitungssteg lediglich punktuell erfolgende Materialabtragung ein Herausreißen einzelner Fasern aus dem faserverstärkten Werkstoff weitestgehend vermieden werden kann. Beim Schlichten werden dann Materialreste und insbesondere aus der vorbearbeiteten Wand herausstehende Faserenden abgetrennt.

In Kombination mit den Mantelrillen an dem bzw. bevorzugt den Nachbearbeitungsstegen hat diese Werkzeuggeometrie in Versuchen besonders gute Oberflächen ergeben, insbesondere auch bei Werkstoffen, die mit Polyesterfäden verstärkt sind, welche zu einem Aufspleißen neigen, das in Versuchen wirkungsvoll verhindert wurde. Die Mantelrillen und damit die Schlichtschneiden können dabei relativ flach, also mit relativ kleinem Spiralwinkel, beispielsweise > 30° verlaufen und schlagen daher nicht frontal mit großer Wucht auf die Fadenenden, sondern von der Seite her, wie bei einem Schnitt mit einem Messer, mit verringerter Wucht, aber über eine längere Zeit bzw. Klingenlänge.

Ergänzend zu der Mehrzahl jeweils an einer der Mantelrillen vorgesehenen Schlichtschneiden kann die Anzahl scharfer, also Schlichtschneiden an einem oder mehreren anderen Nachbearbeitungsstegen eine konventionelle Schneide entlang des spitzen Schneidkeils zwischen der dem Nachbearbeitungssteg vorlaufenden Spannut und dem Umfang des Nachbearbeitungsstegs umfassen, an die sich im Falle der Alternative beispielsweise eine Rundschliffphase oder ein ähnlicher, zur Aufsteifung geeigneter umfangsseitiger Arbeitsbereich anschließen könnte. Es wäre auch denkbar, an einem oder mehreren der Nachbearbeitungsstege die Mantelrillen und an einem oder mehreren anderen Nachbearbeitungsstegen eine konventionelle Schlichtschneide vorzusehen.

Als besonders vorteilhaft hat es sich jedoch erwiesen, wenn zumindest ein erster Nachbearbeitungssteg vorgesehen ist, der eine erste Mehrzahl jeweils an einer Mantelrille vorgesehener Schneiden mit positiver Steigung aufweist, und zumindest ein zweiter Nachbearbeitungssteg vorgesehen ist, der eine zweite Mehrzahl jeweils an einer Mantelrille vorgesehener Schneiden mit negativer Steigung aufweist. Durch die Drehzahl des Zerspanungswerkzeugs, die bei einigen tausend oder zehntausend Umdrehungen pro Minute liegen kann, wird somit eine Art "Scherenschnitt" simuliert, bei dem aus der Wand herausstehende Faserstümpfe wie mit einer Schere durchgeschnitten bzw. abgetrennt werden können.

Durch die gegenläufige Orientierung der Mantelrillen und damit der Schneiden an den ersten und zweiten Nachbearbeitungsstegen kann je nach zu bearbeitendem Werkstoff bzw. je nach in dem zu fräsenden oder zu bohrenden Werkstück zur Faserverstärkung verwendeten Fasern der beschriebene Scherenschnitteffekt durch geeignete Wahl des Spiral- bzw. Steigungswinkels oder Drallwinkels, mit dem die Mantelrillen und damit die Schneiden zur Werkzeugachse geneigt sind, aber auch zueinander gegenläufig sind, das Ergebnis optimiert werden. Es hat sich jedoch herausgestellt, dass ein Spiralwinkel von betragsmäßig mindestens 15-20° an beiden Nachbearbeitungsstegarten für alle bekannten faserverstärkten Werkstoffe vorteilhaft ist. Der Spiralwinkel ist der Winkel, der von den Schneiden und der Werkzeugachse in einer Projektionsebene aufgespannt wird.

So kann der Spiralwinkel der Mantelrillen an der Anzahl erster oder der Anzahl zweiter Nachbearbeitungsstege steiler und der Spiralwinkel an der anderen Anzahl Nachbearbeitungsstege flacher sein, wobei es sogar denkbar wäre, dass der Spiralwinkel an den ersten und den zweiten Nachbearbeitungsstegen positiv oder auch an beiden negativ ist, wenn er sich weit genug unterscheidet, um den Scherenschnitt zu simulieren. Vorteilhaft sind sie aber auf jeden Fall gegenläufig, das heißt an dem einen (z.B. ersten) Bearbeitungssteg positiv und an dem anderen, (z.B. zweiten) Bearbeitungssteg negativ. Zur Bearbeitung von Materialien mit Polyesterfäden hat es sich dabei als besonders vorteilhaft erwiesen, wenn die Rillen um ca. 45° gegenläufig zueinander sind, wenn sich ihr Abbild an einer bestimmten Position am Werkstück also mit 45° kreuzt. Für Fäden aus Keflar hat sich dagegen ein Kreuzungswinkel von 60° als geeignet erwiesen und für Arimit ein Kreuzungswinkel von 120°, jeweils näherungsweise. Um den korrespondierenden Effekt der Mantelrillen an dem ersten Nachbearbeitungssteg und der gegenläufig abgewinkelten Mantelrillen bzw. Schneiden an dem zweiten Nachbearbeitungssteg zu optimieren ist es dabei Vorteil, wenn die Mantelrillen an allen Nachbearbeitungsstegen gleich dimensioniert sind.

Vorteilhaft ist es ferner, wenn eine geradzahlige Mehrzahl von Spannuten und damit eine geradzahlige Mehrzahl von Stegen vorgesehen sind, so dass sich Vor- und Nachbearbeitungsstege in Umfangsrichtung abwechseln können. Eine besonders bevorzugte Weiterbildung hat vier Spannuten und Stege, davon zwei Vorbearbeitungsstege mit umfangsseitigen Pfeilen und zwei Nachbearbeitungsstege, von denen einer als erster Nachbearbeitungssteg und einer als zweiter Nachbearbeitungssteg ausgebildet ist, wobei in Umfangsrichtung zwischen den beiden Nachbearbeitungsstegen jeweils ein Vorbearbeitungssteg vorgesehen ist. Es sind jedoch auch Ausführungsformen der Erfindung mit sechs, acht oder mehr Stegen denkbar, bei denen sich Vor- und Nachbearbeitungsstege in Umfangsrichtung abwechseln können.

Vorteilhaft ist es ferner, wenn an den Nachbearbeitungsstegen sowohl die scharfe Schneide entlang der Kante zur vorlaufenden Spannut vorgesehen ist als auch die scharfen Schneiden an den Mantelrillen, wobei die Mantelrillen einen anderen Drall -bzw. Spiralwinkel aufweisen als die Spannuten und somit die Schneide entlang der Spannut durchbrechen. Auf diese Weise wirken die Mantelrillen zusätzlich als Spanbrechernuten für die Schneide entlang der Spannut.

Weiterhin vorteilhaft ist auch an zumindest einem, bevorzugt entlang jedes Vorbearbeitungsstegs ein spitzer Schneidkeil zwischen der dem Vorbearbeitungssteg vorlaufenden Spannut und dem Umfang des Vorbearbeitungsstegs vorgesehen, so dass sich der Vorbearbeitungssteg mit dem Schneidkeil ins Material hineingraben kann und dadurch große Materialdicken pro Umdrehung durch die Schruppzähne zertrümmert werden können.

Die Zähne weisen dabei vorteilhaft eine polygonale und insbesondere rautenförmige Grundfläche und bevorzugt eine Pyramidenform auf und sind entlang sich mit positiver und negativer Steigung kreuzender Linien auf der Mantelfläche des Arbeitsbereichs des jeweiligen Vorbearbeitungsstegs angeordnet. Derartige Pyramiden lassen sich durch Einschleifen von Nuten entlang der sich kreuzenden Linien relativ einfach herstellen bzw. einarbeiten.

Eine besonders gute Aussteifung bei der Fahrt ins Volle erzielt man, wenn die Stege äquidistant über den Werkzeugumfang verteilt sind, wenn die Phasenwinkel von der Schneidkante eines Stegs bis zur Schneidkante des nächsten, nachlaufenden Stegs also gleich oder zumindest in etwa gleich sind. Dabei hat es sich im Sinne einer guten Steifigkeit und damit einhergehenden Genauigkeit bei der Bohr- oder Fräsbearbeitung als positiv herausgestellt, wenn sich der Arbeitsbereich jedes Vorbearbeitungsstegs über seinen gesamten Umfangsabschnitt zwischen der jeweils vorlaufenden Spannut und der jeweils nachlaufenden Spannut erstreckt und nicht nur im Bereich einer relativ kleinen Rundschliffphase, wenn der bzw. jeder Vorbearbeitungssteg also keine umfangsseitige Freifläche aufweist. Das gleiche gilt für den bzw. die Nachbearbeitungsstege.

Das erfindungsgemäß oder vorteilhaft weiter gebildete Zerspanungswerkzeug wurde als Fräswerkzeug und insbesondere als Stirnfräser konzipiert und weist daher bevorzugt eine zum Fahren ins Volle geeignete Spitzengeometrie auf. Es wäre jedoch ebenso denkbar, andere Zerspanungswerkzeuge, wie z.B. Bohrer mit den erfindungsgemäß oder vorteilhaft weitergebildeten Vor- bzw.

Nachbearbeitungsstegen auszubilden.

Nachfolgend wird eine vorteilhafte Ausführungsform der Erfindung der beiliegenden Zeichnung näher erläutert.

Es zeigen:
- Figur 1: eine Stirnansicht der Werkzeugspitze eines Stirnfräsers gemäß einer vorteilhaften Ausführungsform der Erfindung;
- Figur 2: eine schematische Seitenansicht des in Figur 1 gezeigten Stirnfräsers.

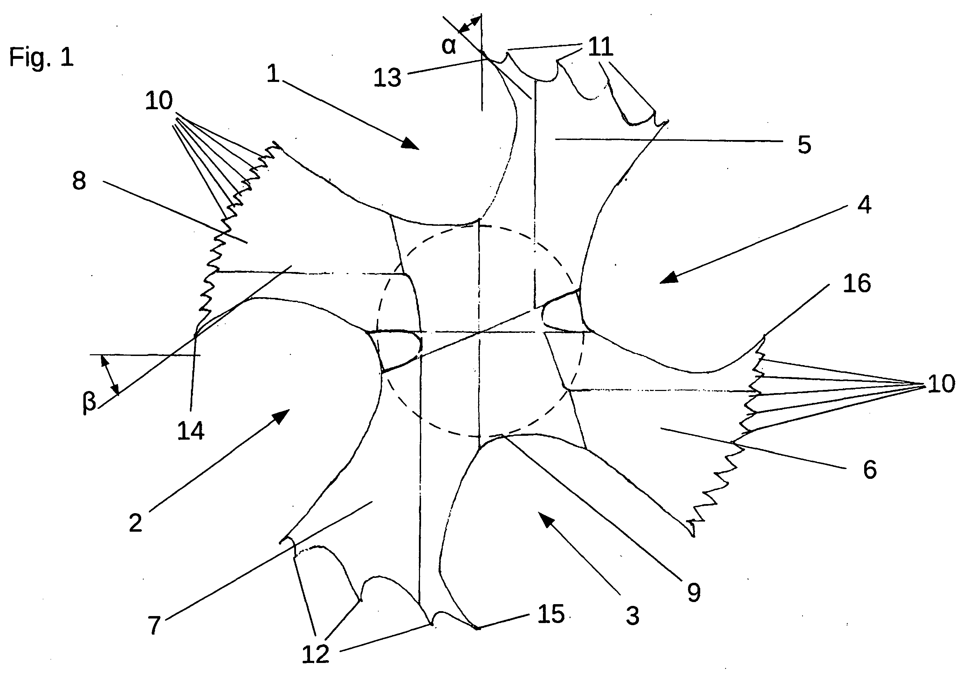

Der in den Figuren gezeigte Stirnfräser weist vier äquidistant beabstandete Spannuten 1, 2, 3,4 auf, welche um ein Zylinderkemsegment 9 herum platzierte Stege 5, 6, 7, 8 äquidistant voneinander beabstanden. An der der vorlaufenden Spannut 1, 2, 3, 4 zugewandten, umfangsseitigen Außenkante der Stege 5, 6, 7, 8 ist jeweils eine Schneide 13, 14, 15, 16 an einem spitzen Schneidkeil vorgesehen, wobei die in der Figur 1 eingezeichneten Spanwinkel α an den beiden Stegen 5, 7 und β an den beiden Stegen 6, 8 gleich groß sind, in der Figur jedoch etwas überzeichnet dargestellt sind und in der Realität ca. 8° betragen.

An den beiden gegenüberliegenden Stegen 6, 8 sind dabei in ihrem umfangsseitigen Arbeitsbereich, der sich von der Werkzeugspitze entlang der Werkzeugachse erstreckt, pyramidenförmige Zähne 10 eingearbeitet, in dem entlang sich kreuzender Linien auf der Umfangsmantelfläche dreieckförmige Nuten in die Umfangsoberfläche der Stegen 6, 8 eingeschliffen worden sind. Die beiden gegenüberliegenden Stege 6, 8 dienen somit als Vor- oder Grob- bzw. Schruppbearbeitungsstege, die beim Fräsen das in Angriff befindliche, faserverstärkte Material des Werkstücks mit ihren Zähnen 10 zertrümmern sollen.

An den beiden weiteren Stegen 5, 7 sind dagegen jeweils schräg zur Werkzeugachse verlaufende Mantelrillen in die umfangsseitige Manteloberfläche der Stege 5, 7 eingearbeitet bzw. eingeschliffen, an denen bzw. an deren der Mantelrille nachlaufenden, umfangsseitigen Außenkante jeweils eine scharfe Schneide 11, 12 ausgebildet ist. Die beiden Stege 5, 7 dienen somit als Nachbearbeitungs- bzw. Feinbearbeitungs- oder Schlichtstege und schaben das beim Schruppen mittels der Vorbearbeitungsstege 6, 8 übrig gelassene Material von der bearbeiteten Werkzeugwand ab, insbesondere dabei aus der Werkstückwand hervortretende Faserenden.

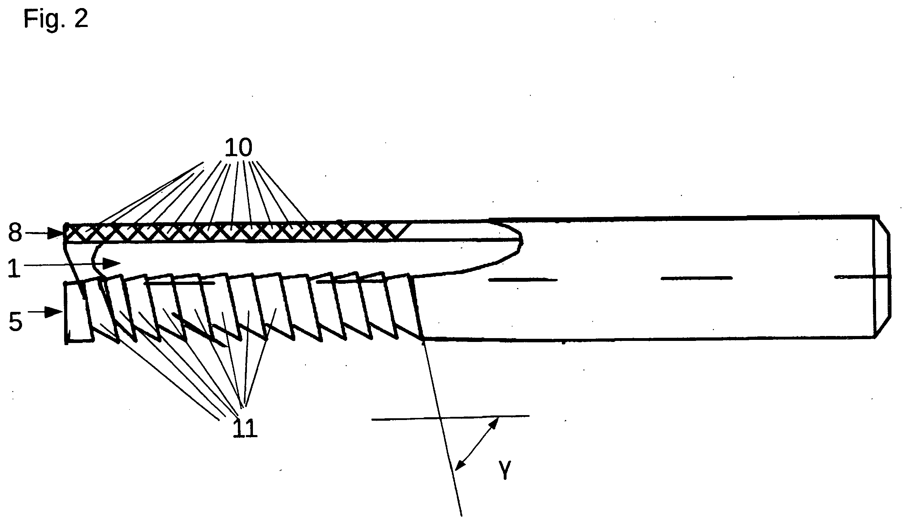

Die Spannuten 1, 2, 3, 4 verlaufen dabei geradlinig, also unverdrallt, wohingegen die Mantelrillen und damit die Schneiden 11, 12, wie aus Figur 2 ersichtlich ist, parallel zueinander mit einer Steigung spiralsegmentförmig um die Werkzeugachse herum gewendelt sind. Der Spiral- bzw. Drallwinkel γ der Mantelrillen mit den Schneiden 11 am Nachbearbeitungssteg 5 ist dabei positiv und beträgt in gezeigtem Beispiel ca. 75°. Die Mantelrillen mit den Schneiden 12 an dem anderen Nachbearbeitungssteg 7 sind entsprechend parallel nebeneinander spiralsegförmig ausgebildet, haben jedoch einen gegenläufigen, also negativen Drallwinkel, im Beispiel betragsmäßig ebenfalls 75°. Somit unterscheiden sich die Nachbearbeitungsstege 5, 7 in der Steigung ihrer umfangsseitig eingeschliffenen Mantelrillen und damit der jeweiligen Schneiden 11, 12, so dass der Nachbearbeitungssteg 5 als erster Nachbearbeitungssteg 5 bezeichnet wird und der Nachbearbeitungssteg 7 als zweiter Nachbearbeitungssteg 7.

Abweichungen und Modifikationen von den gezeigten Ausführungsformen sind möglich, ohne den Rahmen der Erfindung zu verlassen.

So sind die Zähne 10 im dargestellten Beispiel in etwa halb so hoch wie die Mantelrillen tief. Es hat sich jedoch bewährt, wenn die Höhe der Zähne in etwa der Tiefe der Mantelrillen entspricht. Auf jeden Fall sollte die Zahnhöhe größenordnungsmäßig der Mantelrillentiefe entsprechen.

## Patentansprüche

1. Zerspanungswerkzeug zur spanenden Bearbeitung von faserverstärkten Werkstoffen wie CFK, GFK oder mit Polyesterfäden verstärkten Kunststoffen, mit
einer Mehrzahl von Spannuten (1, 2, 3, ,4), welche um ein Zylinderkernsegment (9) herum plazierte Stege (5, 6, 7, 8) in Umfangsrichtung voneinander beabstanden, wobei
zumindest einer der Stege (6, 8) als Vorbearbeitungssteg (6, 8) und zumindest ein anderer der Stege (5, 7) als Nachbearbeitungssteg (5, 7) ausgebildet ist, welche jeweils einen sich entlang oder mit Drall spiralsegmentförmig um die Werkzeugachse des Zerspanungswerkzeugs erstreckenden, umfangsseitigen Arbeitsbereich aufweisen,
der Arbeitsbereich jedes Vorbearbeitungsstegs (6, 8) als umfangsseitige Feile mit einer Vielzahl von Zähnen (10) ausgebildet ist, die in eine zylinderoberflächensegmentförmige Mantelfläche des Arbeitsbereichs eingearbeitet sind, und
im Arbeitsbereich jedes Nachbearbeitungsstegs (5, 7) eine Anzahl sich parallel zur oder mit Drall spiralsegmentförmig um die Werkzeugachse erstreckender, scharfer Schneiden (11, 12, 13, 15) vorgesehen ist,
**dadurch gekennzeichnet, dass**
die Anzahl scharfer Schneiden (11, 12, 13, 15) an zumindest einem Nachbearbeitungssteg (5, 7) eine Mehrzahl von jeweils an einer umfangsseitigen Mantelrille vorgesehener Schneiden (11, 12) umfasst, wobei die Mantelrillen parallel zueinander und mit Steigung zur dem zumindest einen Nachbearbeitungssteg (5, 7) vorlaufenden Spannut (1, 3) in eine zylinderoberflächensegmentförmige Mantelfläche des Arbeitsbereichs eingearbeitet sind.

2. Zerspanungswerkzeug nach Anspruch 1, **dadurch gekennzeichnet, dass** zumindest ein erster Nachbearbeitungssteg (5) vorgesehen ist, der eine erste Mehrzahl jeweils an einer Mantelrille vorgesehener Schneiden (11) mit positiver Steigung aufweist, und zumindest ein zweiter Nachbearbeitungssteg (5), der eine zweite Mehrzahl jeweils an einer Mantelrille vorgesehener Schneiden (12) mit negativer Steigung aufweist, wobei die erste Mehrzahl Schneiden (11) und die zweite Mehrzahl Schneiden (12) insbesondere jeweils einen Spiralwinkel (γ) von betragsmäßig mindestens 30° aufweisen, und wobei bevorzugt die Mantelrillen an dem zumindest einen ersten Nachbearbeitungssteg (5) und dem zweiten Nachbearbeitungssteg (5) gleich dimensioniert sind.

3. Zerspanungswerkzeug nach Anspruch 1 oder 2, **dadurch gekennzeichnet, dass** eine geradzahlige Mehrzahl, insbesondere vier Spannuten (1, 2, 3, ,4) und damit eine geradzahlige Mehrzahl, insbesondere vier Stege (5, 6, 7, 8) vorgesehen sind, wobei in Umlaufrichtung abwechselnd jeweils ein Nachbearbeitungssteg (5, 7) auf einen Vorbearbeitungssteg (6, 8) folgt und umgekehrt, und wobei bevorzugt eine gleiche Anzahl erster und zweiter Nachbearbeitungsstege (5), insbesondere ein erster Nachbearbeitungssteg (5) und ein zweiter Nachbearbeitungssteg (5) in wechselnder Abfolge mit jeweils zwischengeordnetem, Vorbearbeitungssteg (6, 8) vorgesehen sind.

4. Zerspanungswerkzeug nach einem der vorhergehenden Ansprüche, **dadurch gekennzeichnet, dass** die Anzahl scharfer Schneiden (11, 12, 13, 15) an zumindest einem, bevorzugt an jedem Nachbearbeitungssteg (5, 7) eine Schneide (13, 15) umfasst, die sich entlang eines spitzen Schneidkeils zwischen der dem Nachbearbeitungssteg (5, 7) vorlaufenden Spannut (1, 3) und dem Umfang des Nachbearbeitungssteg (5, 7) erstreckt und bevorzugt durch die dort vorgesehene Mehrzahl von Mantelrillen durchbrochen ist.

5. Zerspanungswerkzeug nach einem der vorhergehenden Ansprüche, **dadurch gekennzeichnet, dass** sich entlang zumindest eines, bevorzugt entlang jedes Vorbearbeitungsstegs (6, 8) ein spitzer Schneidkeil zwischen der dem Vorbearbeitungssteg (6, 8) vorlaufenden Spannut (2, 4) und dem Umfang des Vorbearbeitungsstegs (6, 8) erstreckt.

6. Zerspanungswerkzeug nach einem der vorhergehenden Ansprüche, **dadurch gekennzeichnet, dass** die Spannuten (1, 2, 3, ,4) und damit die Stege (5, 6, 7, 8) mit einem Drall von maximal 10°, bevorzugt geradlinig parallel zur Werkzeugachse verlaufen.

7. Zerspanungswerkzeug nach einem der vorhergehenden Ansprüche, **dadurch gekennzeichnet, dass** die Stege (5, 6, 7, 8) äquidistant über den Werkzeugumfang verteilt sind.

8. Zerspanungswerkzeug nach einem der vorhergehenden Ansprüche, **dadurch gekennzeichnet, dass** die Zähne (10) jeweils eine polygonale, insbesondere rautenförmige Grundfläche und bevorzugt eine Pyramidenform aufweisen und entlang sich mit positiver und negativer Steigung auf der Mantelfläche kreuzender Linien angeordnet sind, wobei die Höhe der Zähne (10) jedes Vorbearbeitungsstegs (6, 8) größenordnungsmäßig der Tiefe der Mantelrillen jedes Nachbearbeitungsstegs (5, 7) entspricht, insbesondere dem 0,5 - 1,5-fachen der Tiefe der Mantelrillen und beispielsweise gleich der Tiefe der Mantelrillen ist.

9. Zerspanungswerkzeug nach einem der vorhergehenden Ansprüche, **dadurch gekennzeichnet, dass** sich der Arbeitsbereich jedes Vorbearbeitungsstegs (6, 8) über seinen gesamten Umfangsabschnitt zwischen der jeweils vorlaufenden Spannut (2, 4) und der jeweils nachlaufenden Spannut (1, 3) erstreckt, wobei sich bevorzugt auch der Arbeitsbereich jedes Nachbearbeitungsstegs (5, 7) über seinen gesamten Umfangsabschnitt zwischen der jeweils vorlaufenden Spannut (1, 3) und der jeweils nachlaufenden Spannut (4, 2) erstreckt.

10. Zerspanungswerkzeug nach einem der vorhergehenden Ansprüche, **dadurch gekennzeichnet, dass** das Zerspanungswerkzeug als Fräswerkzeug, insbesondere als Stirnfräser ausgebildet ist und bevorzugt eine zum Fahren ins Volle geeignete Spitzengeometrie aufweist.

## Claims

1. A machining tool for machining of fiber-reinforced materials such as CFRP, GFRP or plastics reinforced with polyester filaments, with
a plurality of flutes (1, 2, 3, 4), spacing lands (5, 6, 7, 8) placed around a cylinder core segment (9) in the circumferential direction from each other, wherein
at least one of the lands (6, 8) is formed as a premachining land (6, 8) and at least one other of the lands (5, 7) as a postmachining land (5, 7), which lands (5, 6, 7, 8) respectively comprise a peripheral machining area extending along the tool axis of the machining tool or, shaped as a helix segment, with a twist about the tool axis of the machining tool, wherein
the machining area of each premachining land (6, 8) is formed as peripheral file with a plurality of teeth (10), which are incorporated into a shell surface of the machining area, which shell surface is shaped as a segment of a cylindrical surface, and wherein
in the machining area of every postmachining land (5, 7), a number of sharp cutting edges (11, 12, 13, 15) is provided, extending in parallel to the tool axis or, shaped as a helix segment, with a twist about the tool axis,
**characterized in that**
the number of sharp cutting edges (11, 12 , 13, 15) on at least one postmachining land (5, 7) comprises a plurality of cutting edges (11, 12), each at a peripheral shell groove, wherein the shell grooves are incorporated into a shell surface of the machining area, which shell surface is shaped as a segment of a cylindrical surface, and which shell grooves are in parallel to each other and with slope to the flute (1, 3), which leads the at least one postmachining land (5, 7).

2. Machining tool according to claim 1, **characterized in that** at least one first postmachining land (5) is provided, which has a first plurality of cutting edges (11) with a positive slope, each provided at a shell groove, and at least one second postmachining land (5) is provided, which has a second plurality of cutting edges (12) with a negative slope, each provided at a shell groove, wherein each of the first plurality of cutting edges (11) and the second plurality of cutting edges (12) in particular has a helix angle (γ) of - in terms of absolute value - at least 30°, and wherein preferably the shell grooves on the at least one first postmachining land (5) and on the second postmachining land (5) are dimensioned the same.

3. Machining tool according to claim 1 or 2, **characterized in that** an even-numbered plurality, in particular four flutes (1, 2, 3, 4) and thus an even-numbered plurality, in particular four lands (5, 6, 7, 8) are provided, wherein in the circumferential direction alternately a postmachining land (5, 7) trails a premachining land (6, 8) and vice versa, and wherein preferably an equal number of first and second postmachining lands (5) are provided, in particular a single first postmachining land (5) and a single second postmachining land (5) in an alternating sequence with an interposed premachining land (6, 8).

4. Machining tool according to one of the preceding claims, **characterized in that** the number of sharp cutting edges (11, 12, 13, 15) comprises on at least one, preferably on each postmachining land (5, 7) a cutting edge (13, 15), which extends along an acute cutting wedge between the flute (1, 3) leading the postmachining land (5, 7) and the circumference of the postmachining land (5, 7) and which is preferably broken by the plurality of shell grooves provided there.

5. Machining tool according to one of the preceding claims, **characterized in that** along at least one, preferably along each premachining land (6, 8), an acute cutting wedge extends between the flute (2, 4) leading the premachining land (6, 8) and the circumference of the premachining land (6, 8).

6. Machining tool according to one of the preceding claims, **characterized in that** the flutes (1, 2, 3, 4) and thereby the lands (5, 6, 7, 8) extends with a twist of at most 10°, preferably straight in parallel to the tool axis.

7. Machining tool according to one of the preceding claims, **characterized in that** the lands (5, 6, 7, 8) are equidistantly distributed over the circumference of the tool.

8. Machining tool according to one of the preceding claims, **characterized in that** the teeth (10) each have a polygonal, in particular lozenged base surface and preferably each have a pyramid shape and are disposed along lines intersecting with positive and negative slope on the shell surface, with the height of the teeth (10) of each premachining land (6, 8) corresponds in magnitude to the depth of the shell grooves of each postmachining land (5, 7), in particular 0,5 - 1,5 times the depth of the shell grooves and for example equals the depth of the shell grooves.

9. Machining tool according to one of the preceding claims, **characterized in that** the machining area of each premachining land (6, 8) extends over its entire peripheral portion between the respective leading flute (2, 4) and the respective trailing flute (1, 3), wherein preferably also the machining area of each postmachining land (5, 7) extends over its entire peripheral portion between the respective leading flute (1, 3) and the respective trailing flute (4, 2).

10. Machining tool according to one of the preceding claims, **characterized in that** the machining tool is formed as a milling tool, in particular as an end milling cutter and preferably has a tip geometry suitable for driving into solid material.

## Revendications

1. Outil à enlèvement de copeaux destiné à l'usinage par enlèvement de copeaux de matériaux renforcés de fibres, tels que le plastique renforcé de fibres de carbone, le plastique renforcé de fibres de verre ou les plastiques renforcés de fils de polyester, comprenant
une pluralité de rainures à copeaux (1, 2, 3, 4) qui espacent, dans la direction circonférentielle, des nervures (5, 6, 7, 8) placées autour d'un segment de noyau cylindrique (9), dans lequel
l'une au moins des nervures (6, 8) est réalisée comme nervure de préusinage (6, 8) et au moins une autre des nervures (5, 7) est réalisée comme nervure d'usinage postérieur (5, 7) qui présentent chacune une zone de travail circonférentielle s'étendant le long de ou avec torsion, en forme de segment de spirale, autour de l'axe d'outil de l'outil à enlèvement de copeaux,
la zone de travail de chaque nervure de préusinage (6, 8) est réalisée en tant que lime circonférentielle ayant une pluralité de dents (10) qui sont réalisées dans une surface latérale en forme de segment de surface de cylindre de la zone de travail, et
un nombre de tranchants (11, 12, 13, 15) aiguisés qui s'étendent parallèlement à ou avec torsion, en forme de segment de spirale, autour de l'axe d'outil est prévu dans la zone de travail de chaque nervure d'usinage postérieur (5, 7),
**caractérisé par le fait que**
le nombre de tranchants (11, 12, 13, 15) aiguisés sur au moins une nervure d'usinage postérieur (5, 7) comprend une pluralité de tranchants (11, 12) prévus chacun sur une cannelure circonférentielle de surface latérale, les cannelures de surface latérale étant ménagées parallèlement les unes aux autres et à pas par rapport à la rainure à copeaux (1, 3) située devant ladite au moins une nervure d'usinage postérieur (5, 7), dans une surface latérale en forme de segment de surface de cylindre de la zone de travail.

2. Outil à enlèvement de copeaux selon la revendication 1, **caractérisé par le fait qu'**au moins une première nervure d'usinage postérieur (5) est prévue qui présente une première pluralité de tranchants (11) à pas positif prévus chacun sur une cannelure de surface latérale, et qu'au moins une deuxième nervure d'usinage postérieur (5) est prévue qui présente une deuxième pluralité de tranchants (12) à pas négatif qui sont prévus chacun sur une cannelure de surface latérale, ladite première pluralité de tranchants (11) et ladite deuxième pluralité de tranchants (12) présentant chacune en particulier un angle d'hélice (γ) d'une valeur d'au moins 30°, et, de préférence, les cannelures de surface latérale sur ladite au moins une première nervure d'usinage postérieur (5) et sur ladite deuxième nervure d'usinage postérieur (5) étant dimensionnées de façon égale.

3. Outil à enlèvement de copeaux selon la revendication 1 ou 2, **caractérisé par le fait qu'**une pluralité paire, en particulier quatre rainures à copeaux (1, 2, 3, 4), et, ainsi, une pluralité paire, en particulier quatre nervures (5, 6, 7, 8) sont prévues, dans lequel, dans la direction de rotation, respectivement alternativement, une nervure de préusinage (6, 8) est suivie d'une nervure d'usinage postérieur (5, 7) et vice versa, et dans lequel, de préférence, un nombre égal de premières et deuxièmes nervures d'usinage postérieur (5), en particulier une première nervure d'usinage postérieur (5) et une deuxième nervure d'usinage postérieur (5) sont prévues en ordre alternant avec une nervure de préusinage (6, 8) disposée respectivement entre elles.

4. Outil à enlèvement de copeaux selon l'une quelconque des revendications précédentes, **caractérisé par le fait que** le nombre de tranchants (11, 12, 13, 15) aiguisés sur au moins une, de préférence sur chaque nervures d'usinage postérieur (5, 7) comprend un tranchant (13, 15) qui s'étend le long d'un taillant aigu entre la rainure à copeaux (1, 3) située devant la nervure d'usinage postérieur (5, 7) et la circonférence de la nervure d'usinage postérieur (5, 7) et qui, de préférence, est percé par ladite pluralité de cannelures de surface latérale y prévue.

5. Outil à enlèvement de copeaux selon l'une quelconque des revendications précédentes, **caractérisé par le fait qu'**un taillant aigu s'étend le long d'au moins une, de préférence le long de chaque nervure de préusinage (6, 8) entre la rainure à copeaux (2, 4) située devant la nervure de préusinage (6, 8) et la circonférence de la nervure de préusinage (6, 8).

6. Outil à enlèvement de copeaux selon l'une quelconque des revendications précédentes, **caractérisé par le fait que** les rainures à copeaux (1, 2, 3, 4) et ainsi les nervures (5, 6, 7, 8) s'étendent avec une torsion de 10° au maximum, de préférence de manière rectiligne, parallèlement à l'axe de l'outil.

7. Outil à enlèvement de copeaux selon l'une quelconque des revendications précédentes, **caractérisé par le fait que** les nervures (5, 6, 7, 8) sont réparties à distances égales sur la circonférence de l'outil.

8. Outil à enlèvement de copeaux selon l'une quelconque des revendications précédentes, **caractérisé par le fait que** les dents (10) présentent chacune une surface de base polygonale, en particulier en forme de losange, et de préférence une forme pyramidale et sont disposées le long de lignes qui se croisent à pas positif et négatif sur la surface latérale, la hauteur des dents (10) de chaque nervure de préusinage (6, 8) correspondant en ordre de grandeur à la profondeur des cannelures de surface latérale de chaque nervure d'usinage postérieur (5, 7), en particulier à 0,5- 1,5 fois la profondeur des cannelures de surface latérale, et étant par exemple égale à la profondeur des cannelures de surface latérale.

9. Outil à enlèvement de copeaux selon l'une quelconque des revendications précédentes, **caractérisé par le fait que** la zone de travail de chaque nervure de préusinage (6, 8) s'étend sur l'ensemble de sa portion circonférentielle entre la rainure à copeaux (2, 4) située respectivement devant et la rainure à copeaux (1, 3) située respectivement derrière, dans lequel, de préférence, la zone de travail de chaque nervure d'usinage postérieur (5, 7) s'étend, elle aussi, sur l'ensemble de sa portion circonférentielle entre la rainure à copeaux (1, 3) située respectivement devant et la rainure à copeaux (2, 4) située respectivement derrière.

10. Outil à enlèvement de copeaux selon l'une quelconque des revendications précédentes, **caractérisé par le fait que** l'outil à enlèvement de copeaux est réalisé en tant qu'outil à fraiser, en particulier en tant que fraise en bout et présente, de préférence, une géométrie de pointe adaptée au fraisage dans la masse.
